# FASCICULE DE BREVET EUROPEEN

(11) **EP 3 653 894 B1**
(45) Date de publication et mention de la délivrance du brevet: **25.08.2021**
(21) Numéro de dépôt: 19209205.4
(22) Date de dépôt: 14.11.2019
(51) Int. Cl.: F16C 11/06, F01N 13/18, F16L 27/04, F16C 33/60

(54) **PIÈCE DE LIAISON COMPRENANT DEUX PARTIES IMBRIQUÉES L'UNE DANS L'AUTRE EN ÉTANT ASSEMBLÉES L'UNE AVEC L'AUTRE, PROCÉDÉ DE FABRICATION ASSOCIÉ**
VERBINDUNGSSTÜCK, DAS ZWEI INEINANDERGREIFENDE TEILE UMFASST, DIE ZUSAMMENGEBAUT SIND, UND ENTSPRECHENDES HERSTELLUNGSVERFAHREN
LINKING PART COMPRISING TWO PARTS INSERTED IN ONE ANOTHER BEING ASSEMBLED WITH ONE ANOTHER, METHOD FOR MANUFACTURING SAME

(30) Priorité: 16.11.2018 FR 1860584; 11.10.2019 FR 1911316
(43) Date de publication de la demande: 20.05.2020
(73) Titulaire: Pipo Moteurs, 07500 Guilherand-Granges (FR); Poly-Shape, 91280 Saint Pierre du Perray (FR)
(72) Inventeur: RIVOIRE, Jean, 26750 SAINT PAUL LES ROMANS (FR); IMPELLIZZERI, Frédéric, 13300 SALON DE PROVENCE (FR); BAROZIER, Frédéric, 07130 SOYONS (FR)
(74) Mandataire: Nony

(56) Documents cités:
- WO-A1-90/15229
- US-A- 4 071 269
- US-A- 4 236 738
- US-A1- 2005 029 813

## Description

### Domaine technique

La présente invention concerne le domaine des pièces mécaniques de liaison permettant de relier deux éléments.

L'invention vise plus particulièrement à proposer une pièce de liaison destinée à réaliser une liaison mécanique, de préférence une liaison rotule, entre deux éléments susceptibles de subir des mouvements différentiels, tout en permettant le passage d'un fluide à travers la pièce de liaison.

Ainsi, la pièce de liaison doit autoriser un certain degré de mouvement entre les deux éléments qu'elle relie, dans le but d'éviter l'apparition de contraintes mécaniques indésirables et d'assurer un degré de fiabilité et d'étanchéité satisfaisant.

Sous un autre de ses aspects, l'invention concerne également un procédé de fabrication de cette pièce de liaison.

L'application principale visée par l'invention concerne une liaison rotule agencée dans un circuit de gaz d'échappement en sortie d'un moteur à combustion dans un véhicule automobile, par exemple en sortie ou en entrée d'un turbocompresseur ou en sortie d'une soupape de décharge de turbocompresseur.

Bien que décrite en référence à l'application principale, l'invention s'applique à tout dispositif, mécanisme, équipement, appareil, machine... où un besoin existe pour une liaison fiable, étanche et autorisant des degrés de liberté en rotation dans une ou plusieurs directions. Par « liaison rotule », on entend une liaison mécanique qui permet des mouvements de rotation libres dans toute direction mais aucun mouvement significatif en translation.

### Technique antérieure

Un moteur de véhicule automobile, en particulier un moteur à combustion interne de véhicule de compétition, est soumis à des chocs et des vibrations pouvant être particulièrement importants.

Par conséquent, il est courant, notamment dans le cadre de la mise au point de véhicules pour la compétition, d'intercaler entre le moteur et le châssis des pièces constituées d'un matériau souple, tel que du polyuréthane.

Le but de ces pièces d'amortissement, usuellement appelées « silentblocs », est d'absorber les chocs, les bruits et les vibrations et ainsi d'éviter qu'ils ne soient transmis au châssis du véhicule.

En raison de cet amortissement, un mouvement différentiel entre le moteur et le châssis est inévitable.

Or, ce mouvement différentiel entraîne nécessairement des contraintes mécaniques indésirables entre le collecteur de gaz d'échappement situé en sortie du moteur, le carter de turbine du turbocompresseur situé après le collecteur d'échappement et enfin, la ligne d'échappement.

De plus, de fortes sollicitations d'origine thermique dues à la température élevée des gaz en sortie du moteur s'imposent à ces différents éléments, venant s'ajouter aux contraintes mécaniques.

Par conséquent, et comme les inventeurs l'ont constaté, la combinaison de ces facteurs peut conduire à l'apparition de dégradations importantes pouvant aller jusqu'à la casse, soit du collecteur d'échappement et/ou du turbocompresseur, soit de la ligne d'échappement.

Ces casses qui peuvent être récurrentes, induisent un risque d'incendie du véhicule automobile.

Or, les solutions existantes à ce problème technique ne sont pas entièrement satisfaisantes. Parmi ces solutions, il existe des mécanismes de coulisseau mettant en œuvre une pièce de guidage pour limiter les contraintes mécaniques.

Des éléments de liaison flexibles, tels que des tuyaux tressés et des tuyaux annelés, sont également connus et utilisés dans ce cadre.

Il existe enfin des systèmes de liaison à rotule simple permettant d'obtenir une libération des contraintes mécaniques.

Le brevet US 4071269 divulgue une liaison rotule étanche comportant un joint et un mécanisme de guidage, le joint permettant d'assurer l'étanchéité de la liaison rotule. Le joint comprend notamment une portion cylindrique soudée sur l'intérieur d'un tube et une portion annulaire flexible insérée en ajustement serré, ce qui permet d'assurer l'étanchéité de la pièce. Le mécanisme de guidage comporte une partie mâle et une partie femelle, cette dernière comportant une enveloppe intérieure et une enveloppe extérieure entre lesquelles est insérée une enveloppe de la partie mâle. L'enveloppe de la partie mâle et l'enveloppe de la partie femelle sont rapportées sur des tuyaux de support.

La demande WO 90/15229 divulgue une pièce de liaison rotule comportant une partie mâle insérée dans une partie femelle. Un dispositif de compression comportant un ressort exerce une force sur la partie femelle pour réaliser un contact entre les parties mâle et femelle et obtenir un certain degré d'étanchéité.

Cependant, aucune des solutions existantes n'atteint un degré de fiabilité et/ou d'étanchéité suffisant, tout en permettant de libérer les contraintes en rotation dans une ou plusieurs directions.

Il existe donc un besoin d'améliorer les liaisons mécaniques en sortie de moteur, dans le circuit des gaz d'échappement d'un véhicule automobile, notamment pour pallier les inconvénients des solutions existantes.

De manière plus générale, il existe un besoin de liaisons mécaniques entre deux éléments, qui autorisent les degrés de liberté en rotation dans une ou plusieurs directions, tout en garantissant une fiabilité et une étanchéité élevées.

Le but de l'invention est de répondre au moins partiellement à ce(s) besoin(s).

### Exposé de l'invention

Pour ce faire, l'invention a pour objet selon une première alternative une pièce de liaison destinée à réaliser une liaison mécanique entre deux éléments, comprenant :
- une partie femelle comprenant une portion d'assemblage mécanique à un premier élément distinct de la pièce, et une portion de réception dans la continuité de la portion d'assemblage mécanique, la portion de réception comprenant une seule enveloppe conformée en une section équatoriale de sphère,
- une partie mâle comprenant une portion d'assemblage mécanique à un deuxième élément distinct de la pièce, et une portion d'insertion dans la continuité de la portion d'assemblage mécanique, la portion d'insertion étant conformée en une section équatoriale de sphère, insérée avec jeu à l'intérieur de l'enveloppe de la portion de réception en étant maintenue dans cette dernière, de sorte que la partie mâle soit mobile en rotation selon un ou plusieurs degrés de liberté par rapport à la partie femelle tout en étant assemblée mécaniquement avec cette dernière, la partie mâle et la partie femelle étant assemblées entre elles sans aucun composant ou moyen supplémentaire, et la pièce de liaison étant configurée de sorte que la surface extérieure de la portion d'insertion et la surface intérieure de l'enveloppe de la portion de réception sont en contact continu sur l'ensemble de la circonférence de l'intérieur de la pièce de liaison.

Selon une deuxième alternative, la pièce de liaison, destinée à réaliser une liaison mécanique entre deux éléments, comprend :
- une partie femelle comprenant une portion d'assemblage mécanique à un premier élément distinct de la pièce, et une portion de réception dans la continuité de la portion d'assemblage mécanique, la portion de réception comprenant deux enveloppes conformées chacune en une section équatoriale de sphère, les deux sections équatoriales de sphère étant concentriques et séparées par un volume libre,
- une partie mâle comprenant une portion d'assemblage mécanique à un deuxième élément distinct de la pièce, et une portion d'insertion dans la continuité de la portion d'assemblage mécanique, la portion d'insertion étant conformée en une section équatoriale de sphère, insérée avec jeu dans le volume libre de la portion de réception en étant maintenue dans cette dernière, de sorte que la partie mâle soit mobile en rotation selon un ou plusieurs degrés de liberté par rapport à la partie femelle tout en étant assemblée mécaniquement avec cette dernière.

Selon un mode de réalisation particulier, l'une de la portion de réception ou de la portion d'insertion comporte en outre une rainure, l'autre de la portion de réception ou de la portion d'insertion comporte un pion inséré dans la rainure, la rainure et le pion étant configurés de sorte que la partie mâle soit mobile en rotation selon deux degrés de liberté par rapport à la partie femelle.

La rainure peut être ou non traversante.

De manière alternative, l'une de la portion de réception ou de la portion d'insertion comporte en outre une rainure, l'autre de la portion de réception ou de la portion d'insertion comporte une languette de longueur inférieure à celle de la rainure et insérée dans la rainure, la rainure et la languette étant configurées de sorte que la partie mâle soit mobile en rotation selon un degré de liberté par rapport à la partie femelle.

Ainsi, l'invention consiste essentiellement en une pièce de liaison mécanique comprenant deux parties imbriquées l'une dans l'autre de manière à permettre un ou plusieurs degrés de liberté de rotation l'une par rapport à l'autre, toutes en étant assemblées entre elles sans aucun composant ou moyen supplémentaire.

Grâce à l'invention, il est possible de supprimer de manière simple et fiable les contraintes mécaniques qui apparaissent entre deux éléments à relier, susceptibles de subir des mouvements différentiels non contrôlés, par exemple entre un moteur à combustion, un turbocompresseur et une ligne d'échappement dans un véhicule automobile. L'assemblage mécanique de la pièce de liaison selon l'invention avec les deux éléments extérieurs peut se faire par soudure, collage (suivant les matériaux utilisés) ou encore par bridage.

De préférence, l'amplitude de mouvement ou « angle de rotulage », entre la partie femelle et la partie mâle, définie par l'angle d'inclinaison entre l'axe de symétrie de la portion de réception et celui de la portion d'insertion, peut être compris entre 0° et 20°, de préférence entre 0° et 10°.

Selon un mode de réalisation particulier, les portions d'assemblage mécanique respectivement de la partie femelle et de la partie mâle sont des portions de cylindre, mais ces portions ne sont pas limitées à cette géométrie et peuvent être de natures différentes.

Ainsi, selon un mode de réalisation alternatif, les portions d'assemblage mécanique sont des portions de troncs de cônes.

De préférence, les portions de cylindre sont de diamètres extérieurs identiques.

Selon un mode de réalisation avantageux, les parties mâle et femelle sont débouchantes, de sorte qu'un fluide puisse circuler à l'intérieur de la pièce de liaison, depuis l'une des portions d'assemblage mécanique vers l'autre. La pièce de liaison selon l'invention peut ainsi être utilisée dans un circuit de fluide, par exemple pour permettre aux gaz d'échappement d'un moteur à combustion interne d'y circuler.

La conception de la pièce de liaison selon l'invention assure l'étanchéité dynamique d'un écoulement de gaz en son sein. En effet, les inventeurs ont constaté l'absence de fuites de gaz vers l'extérieur, à travers le jeu entre l'enveloppe d'une part et la portion d'insertion d'autre part ou, le cas échéant, à travers le volume libre de la rotule femelle. Ceci peut s'expliquer par la dynamique de l'écoulement du fluide à travers la pièce de liaison.

Selon une première variante, les portions de cylindre sont de diamètres intérieurs identiques. La pièce de liaison peut ainsi être mise en série dans un circuit de fluide où circule un seul débit de gaz. La pièce de liaison a ainsi en quelque sorte une fonction de joint de cardan à circulation interne de fluide, entre deux éléments. Il peut s'agir par exemple d'une liaison de type joint de cardan entre un turbocompresseur et une ligne d'échappement d'un moteur à combustion interne.

Selon une deuxième variante, les portions de cylindre sont de diamètres intérieurs différents. La pièce de liaison est ainsi adaptée pour relier en parallèle deux portions de circuit de fluide de sections, soit convergentes, soit divergentes. Cette liaison en parallèle peut être avantageuse pour des lignes de fluide qui sont doubles. Il peut s'agir par exemple d'une liaison de sortie de turbocompresseur avec une sortie de soupape de décharge. Avantageusement, le(s) matériau(x) constitutif(s) de la partie mâle et de la partie femelle sont adaptés pour supporter des températures comprises entre -50°C et 1100°C et en particulier, jusqu'à 1050°C.

Selon l'application visée, et notamment selon le fluide circulant à travers la pièce de liaison et selon les contraintes de température et de pression, tout type de matériau adapté pour la fabrication additive peut être envisagé.

De préférence, le(s) matériau(x) constitutif(s) de la partie mâle et/ou de la partie femelle sont choisi(s) parmi tout type de matériau soudable, tel qu'un alliage à base de nickel comme de l'Inconel® 625 ou un acier inoxydable. Il est envisageable que la partie mâle et la partie femelle soient constituées du(des) même(s) matériau(x), ou que la partie mâle et la partie femelle soient constituées de matériaux différents.

Selon un mode de réalisation avantageux de la deuxième alternative de l'invention selon laquelle la partie femelle comprend deux enveloppes, la pièce de liaison comprend un ou plusieurs orifices traversants depuis l'extérieur dans le volume libre. On peut ainsi obtenir un effet venturi dans le volume libre et par là améliorer encore l'étanchéité aux gaz circulant à travers la pièce de liaison selon l'invention.

Selon une variante de réalisation, lorsqu'on envisage un assemblage mécanique par vissage à au moins un des deux éléments extérieurs de la pièce, l'une et/ou l'autre des portions d'assemblage mécanique au premier et au deuxième élément peut intégrer une bride de fixation.

L'invention concerne également un procédé de fabrication d'une pièce de liaison telle que décrite précédemment, selon lequel la rotule femelle et la rotule mâle sont réalisées et assemblées mécaniquement ensemble en une seule étape par fabrication additive.

En raison de la géométrie sphérique des portions d'insertion et de réception, il n'est pas possible d'insérer et simultanément d'assembler entre elles la partie mâle dans la partie femelle, si ces deux parties sont fabriquées séparément.

Il en résulte que seul un procédé de fabrication additive permet d'obtenir les parties mâle et femelle de la pièce de liaison selon l'invention.

Bien entendu, si l'une ou l'autre des portions d'assemblage mécanique intègre une bride de fixation, alors cette dernière peut être intégrée également lors la fabrication additive ou de manière alternative rapportée par soudage ou brasage.

La présente invention a également pour objet l'utilisation d'une pièce de liaison telle que décrite précédemment dans un circuit de gaz d'échappement en sortie d'un moteur à combustion interne, notamment d'un véhicule automobile, et/ou en entrée d'un turbocompresseur de véhicule automobile.

### Brève description des dessins

[Fig 1] La figure 1 est une vue schématique en coupe longitudinale d'une partie femelle d'une pièce de liaison selon une première alternative de l'invention.
[Fig 2] La figure 2 est une vue schématique en coupe longitudinale d'une partie mâle d'une pièce de liaison selon l'alternative de la figure 1.
[Fig 3] La figure 3 est une vue schématique en coupe longitudinale d'une pièce de liaison selon l'alternative de la figure 1, la partie mâle étant inclinée par rapport à la partie femelle.
[Fig 4] La figure 4 est une vue en perspective d'une pièce de liaison selon l'alternative de la figure 1.
[Fig 5] La figure 5 est une vue de face d'une pièce de liaison selon l'alternative de la figure 1.
[Fig 5A] La figure 5A est une vue en coupe longitudinale de la figure 5.
[Fig 6] La figure 6 est une vue schématique en coupe longitudinale d'une partie femelle d'une pièce de liaison selon une deuxième alternative de l'invention.
[Fig 7] La figure 7 est une vue schématique en coupe longitudinale d'une partie mâle d'une pièce de liaison selon l'alternative de la figure 6.
[Fig 8] La figure 8 est une vue schématique en coupe longitudinale d'une pièce de liaison selon l'alternative de la figure 6, la partie mâle étant inclinée par rapport à la partie femelle.
[Fig 9] La figure 9 est une vue en perspective d'une pièce de liaison selon l'alternative de la figure 6.
[Fig 10] La figure 10 est une vue de face d'une pièce de liaison selon une variante de l'alternative de la figure 6.
[Fig 10A] La figure 10A est une vue en coupe longitudinale de la figure 10.
[Fig 11] La figure 11 illustre une pièce de liaison selon l'invention.
[Fig 12] La figure 12 représente une pièce de liaison selon l'invention, comportant des brides de fixation, soudées aux extrémités des parties mâle et femelle.

### Description détaillée

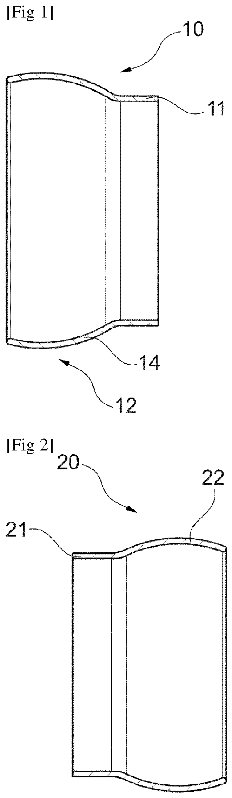

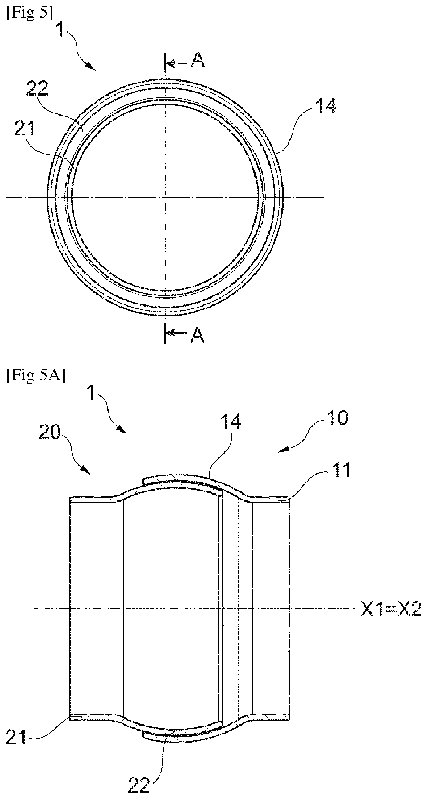

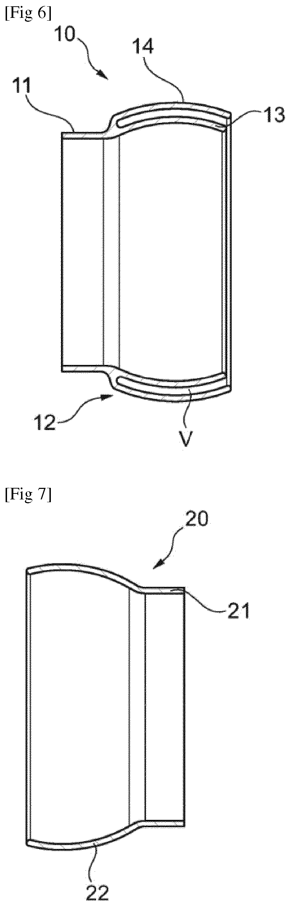

Par souci de clarté, les mêmes références désignent les mêmes éléments à la fois pour l'alternative de l'invention décrite en référence aux figures 1 à 5 et pour celle décrite en référence aux figures 6 à 10.

On décrit maintenant, en référence aux figures 1 à 5, une pièce de liaison 1 selon une première alternative de l'invention.

Une pièce de liaison 1 selon l'invention comprend une partie femelle 10 et une partie mâle 20 assemblées mécaniquement entre elles. Dans l'exemple illustré, les parties 10 et 20 sont débouchantes afin de permettre une circulation de fluide au sein de la pièce de liaison.

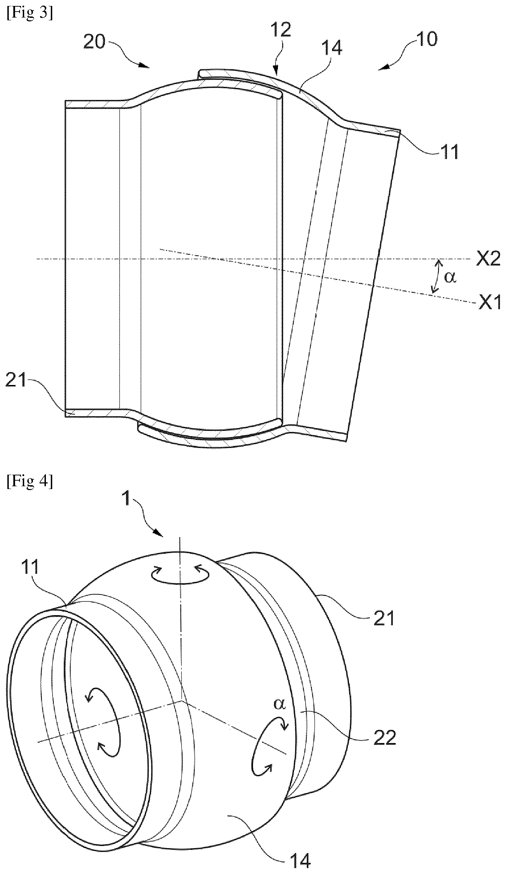

Comme visible plus particulièrement en figure 3, la partie femelle 10 présente une symétrie de révolution autour d'un axe X1 et la partie mâle 20 est symétrique de révolution autour d'un axe X2.

Chacune des parties 10, 20 comporte une portion d'assemblage mécanique 11, 21 qui permet de relier la pièce de liaison à un élément extérieur, telle qu'une sortie de turbocompresseur ou une ligne d'échappement de moteur à combustion de véhicule automobile. Les assemblages mécaniques avec les éléments extérieurs peuvent être réalisés par soudure, par collage ou par vissage par l'intermédiaire de brides de fixation intégrées comme détaillé par la suite.

Dans l'exemple illustré, les portions d'assemblage mécanique 11, 21 peuvent être des cylindres droits.

La partie femelle 10 comporte également une portion de réception 12 intégrale et dans la continuité de la portion d'assemblage mécanique 11. Selon cette première alternative de l'invention, la portion de réception 12 est constituée d'une unique enveloppe 14 conformée en une section équatoriale de sphère.

Comme il s'agit d'une section équatoriale, cette section de sphère est conformée de sorte que l'ouverture de la section de sphère va tout d'abord en s'élargissant à partir de la portion d'assemblage mécanique jusqu'à atteindre le diamètre de la sphère définie par la section de sphère, puis en se rétrécissant.

La partie mâle 20 comporte quant à elle une portion d'insertion 22 intégrale et dans la continuité de la portion d'assemblage mécanique 21. La portion d'insertion 22 est constituée d'une seule section équatoriale de sphère, conformée de sorte que l'ouverture de la section s'élargit à partir de la portion d'assemblage mécanique jusqu'à atteindre le diamètre de la sphère définie par la section de sphère, puis se rétrécit.

Les dimensions de la portion d'insertion 22 et de la portion de réception 12 sont telles que la portion d'insertion 22 peut être insérée avec jeu et maintenue mécaniquement dans l'enveloppe unique 14 de la partie femelle. Le maintien mécanique entre les deux portions complémentaires 12, 22 autorise un mouvement libre de rotation dans toutes les directions entre les deux parties 10, 20.

Les portions complémentaires 12, 22 sont séparées par un jeu, dont la valeur dépend notamment des diamètres des portions 12, 22. Le jeu de fonctionnement peut par exemple être compris entre 0,02 mm et 0,30 mm.

La partie femelle 10 peut, selon une deuxième alternative de l'invention, comporter deux enveloppes 13, 14. Les figures 6 à 10 que l'on décrit ci-dessous illustrent cette deuxième alternative de pièce de liaison selon l'invention.

Une pièce de liaison 1 selon cette deuxième alternative comprend une partie femelle 10 et une partie mâle 20 assemblées mécaniquement entre elles. Dans l'exemple illustré, les parties 10 et 20 sont débouchantes, afin de permettre une circulation de fluide au sein de la pièce de liaison.

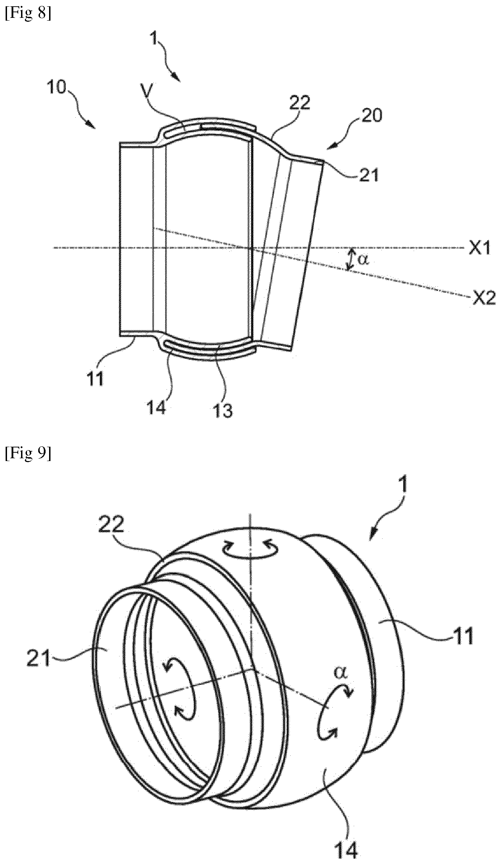

Comme visible plus particulièrement en figure 8, la partie femelle 10 présente une symétrie de révolution autour d'un axe X1 et la partie mâle 20 est symétrique de révolution autour d'un axe X2.

De manière similaire à la première alternative décrite précédemment, chacune des parties 10, 20 comporte une portion d'assemblage mécanique 11, 21 qui permet de relier la pièce de liaison à un élément extérieur, telle qu'une sortie de turbocompresseur ou une ligne d'échappement de moteur à combustion de véhicule automobile. Les assemblages mécaniques avec les éléments extérieurs peuvent être réalisés par soudure, par collage ou par vissage par l'intermédiaire de brides de fixation intégrées comme détaillé par la suite. Dans l'exemple illustré, les portions d'assemblage mécanique 11, 21 peuvent être des cylindres droits.

La partie femelle 10 comporte également une portion de réception 12 intégrale et dans la continuité de la portion d'assemblage mécanique 11. Selon cette deuxième alternative de l'invention, la portion de réception 12 est constituée de deux enveloppes 13, 14 conformées chacune en une section équatoriale de sphère.

Comme il s'agit de sections équatoriales, ces sections de sphère sont conformées de sorte que l'ouverture des sections de sphère s'élargit à partir de la portion d'assemblage mécanique jusqu'à atteindre le diamètre de la sphère définie par chaque section de sphère, puis se rétrécit.

Les deux sections équatoriales de sphère 13, 14 sont concentriques et séparées par un volume libre (V).

La partie mâle 20 comporte quant à elle une portion d'insertion 22 intégrale et dans la continuité de la portion d'assemblage mécanique 21. La portion d'insertion 22 est constituée d'une seule section équatoriale de sphère, conformée de manière à ce que l'ouverture de la section va tout d'abord en s'élargissant à partir de la portion d'assemblage mécanique jusqu'à atteindre le diamètre de la sphère définie par la section de sphère, puis en se rétrécissant.

Les dimensions de la portion d'insertion 22 et de la portion de réception 12 sont telles que la portion d'insertion 22 peut être insérée avec jeu et maintenue mécaniquement dans le volume libre V de la partie femelle. Le maintien mécanique entre les deux portions complémentaires 12, 22 autorise un mouvement libre de rotation dans toutes les directions entre les deux parties 10, 20.

Les portions complémentaires 12, 22 sont séparées par un jeu, dont la valeur dépend notamment des diamètres des portions 12, 22. Le jeu de fonctionnement peut par exemple être compris entre 0,02 mm et 0,30 mm.

Par conséquent, quelle que soit l'alternative de la pièce de liaison selon l'invention que l'on considère, la partie mâle ne peut pas être insérée et assemblée mécaniquement dans la partie femelle, si les deux pièces sont fabriquées séparément. Cela est dû à la forme des portions de réception 12 et d'insertion 22.

Ainsi, pour réaliser la pièce de liaison 1, une étape de fabrication additive, permet de réaliser et d'assembler mécaniquement ensemble, simultanément les parties mâle et femelle de la pièce de liaison selon l'invention.

En raison de la géométrie des parties complémentaires 10, 20, leur assemblage obtenu directement par fabrication additive est indémontable.

De manière avantageuse, la conception de la pièce de liaison 1 autorise les parties femelle 10 et mâle 20 à être mobiles en rotation l'une par rapport à l'autre selon les trois degrés de liberté : la pièce de liaison selon l'invention permet donc d'établir une liaison rotule entre deux éléments extérieurs.

Les figures 3 et 8 représentent la pièce 1 en configuration assemblée, la partie mâle 20 étant inclinée d'un angle α par rapport à la partie femelle 10. La rotation de la partie mâle autour de l'axe X1 de symétrie de la partie femelle peut se faire sur 360°, mais l'angle de rotulage maximal de la partie mâle par rapport à la partie femelle dépend de la géométrie des portions de réception et d'insertion et peut varier selon l'application visée.

Dans les exemples illustrés, les diamètres intérieur et extérieur de la portion d'assemblage mécanique 11 de la partie femelle 10 sont égaux à ceux de la portion 21 de la partie mâle. Toutefois, les sections des portions 11 et 21 peuvent être différentes, de sorte à obtenir un profil soit convergent soit divergent. Selon l'application visée, un profil convergent ou divergent peut être avantageux du point de vue de la dynamique d'un fluide circulant à travers la pièce de liaison.

Avantageusement, lorsque la pièce de liaison fait partie d'un circuit de gaz telle qu'une ligne d'échappement de moteur à combustion d'un véhicule automobile, l'étanchéité dynamique de la pièce de liaison est assurée : les inventeurs ont en effet constaté l'absence de fuite de gaz vers l'extérieur à travers le jeu entre la partie mâle 20 et la partie femelle 10 ou à travers le volume libre V de la partie femelle 10. Ceci peut s'expliquer par la dynamique de l'écoulement du fluide à travers la pièce de liaison.

De préférence, dans le cas d'une pièce de liaison telle qu'illustrée en figures 1 à 5 comportant une partie femelle à une seule enveloppe, la circulation des gaz se fait de la partie mâle 20 vers la partie femelle 10.

Inversement, dans le cas d'une pièce de liaison telle que représentée en figures 6 à 10 comportant une partie femelle à deux enveloppes, la circulation des gaz se fait de préférence de la partie femelle 10 vers la partie mâle 20.

Dans les deux cas, le sens de circulation des gaz est tel que les gaz pénètrent en premier lieu dans la partie qui possède la section de sphère de plus petit diamètre. On favorise donc l'étanchéité dynamique de la pièce de liaison, puisque le sens de circulation des gaz empêche, ou du moins limite, leur entrée dans le jeu entre l'enveloppe unique 14 et la portion d'insertion 22 ou dans le volume libre V, selon l'alternative de l'invention que l'on considère.

Une étanchéité statique entre les parties mâle et femelle, sans élément d'étanchéité supplémentaire, est également envisageable, selon l'application envisagée.

Selon la première alternative de l'invention dans laquelle la partie femelle comporte une unique enveloppe 14, un contact continu sur l'ensemble de la circonférence de l'intérieur de la pièce de liaison peut aisément être obtenu entre la surface extérieure de la portion d'insertion 22 et la surface intérieure de l'enveloppe unique 14 de la portion de réception 12. Ce contact continu permet d'obtenir une étanchéité statique. Le contact est par exemple obtenu en imposant une contrainte tendant à écarter les parties mâle et femelle l'une de l'autre, ou inversement en imposant une contrainte tendant à rapprocher les parties mâle et femelle. Le contact n'empêche pas la rotation différentielle des parties mâle et femelle.

De manière similaire, selon la deuxième alternative de l'invention dans laquelle la partie femelle comporte deux enveloppes 13, 14, un contact continu sur l'ensemble de la circonférence de l'intérieur de la pièce de liaison peut aisément être obtenu soit entre la surface extérieure de la portion d'insertion 22 et la surface intérieure de l'enveloppe 14 de la portion de réception 12, soit entre la surface intérieure de la portion d'insertion 22 et la surface extérieure de l'enveloppe 13 de la portion de réception 12.

Là encore, ce contact continu permet d'obtenir une étanchéité statique. Le contact est par exemple obtenu en imposant une contrainte tendant à écarter les parties mâle et femelle l'une de l'autre, ou inversement en imposant une contrainte tendant à rapprocher les parties mâle et femelle. Le contact n'empêche pas la rotation différentielle des parties mâle et femelle. Quelle que soit l'alternative de l'invention considérée, le(s) matériau(x) constitutif(s) de la pièce de liaison selon l'invention est(sont) avantageusement choisis pour que cette dernière supporte des températures de l'ordre de 1000 °C, usuellement rencontrées sur des lignes d'échappement de moteur à combustion.

Cependant, selon les applications envisagées, une pièce de liaison selon l'invention peut être fabriquée avec tout type de matériau qui peut être mis en œuvre par fabrication additive. Le choix du matériau utilisé peut notamment dépendre du type de fluide circulant éventuellement à travers la pièce de liaison, des températures et des pressions auxquelles la pièce de liaison est soumise.

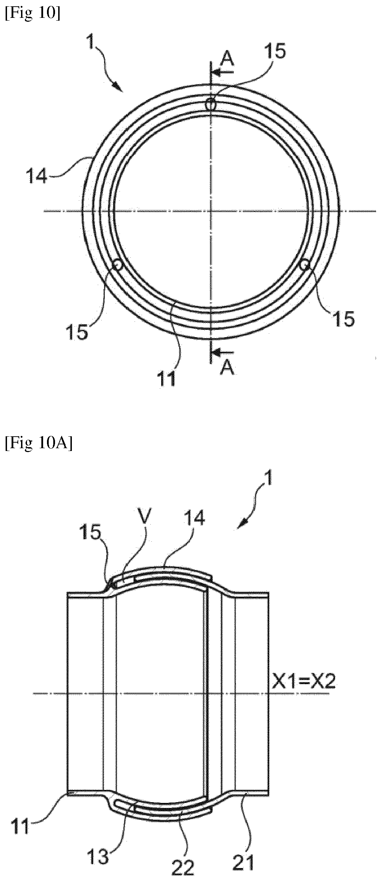

Afin d'améliorer l'étanchéité dynamique, on peut envisager dans le cadre de la deuxième alternative de l'invention de réaliser un ou plusieurs orifices débouchant 15 entre le volume libre V et l'extérieur, comme montré en figures 10 et 10A. Ces orifices débouchant 15 permettent de réaliser un effet venturi et donc de créer en quelque sorte une veine gazeuse à la périphérie de la pièce de liaison.

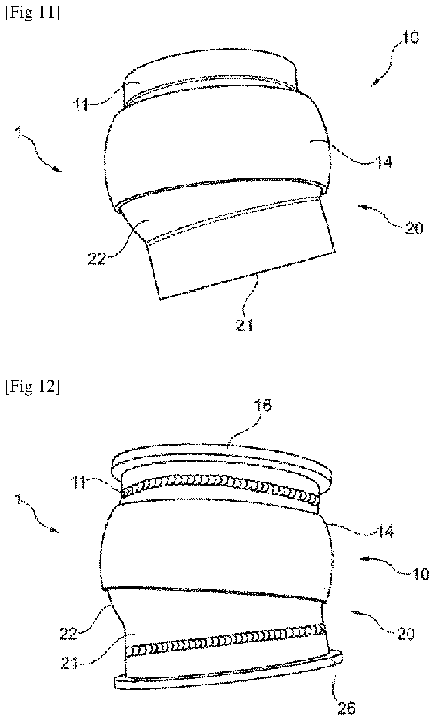

La figure 11 montre une pièce de liaison selon l'invention, destinée à être assemblée par soudure en sortie d'une soupape de décharge de turbocompresseur.

La figure 12 représente une pièce de liaison selon l'invention qui a été assemblée par brides en sortie d'un turbocompresseur d'un moteur de combustion interne et a subi des cycles d'endurance sur banc d'essai. Pour réaliser l'assemblage par brides, une bride 16, 26 a été soudée respectivement en extrémité de la portion 11 de la partie femelle 10 et de la portion 21 de la partie mâle 20.

Les inventeurs ont réalisé des essais d'endurance de plusieurs pièces de liaison 1, de différents diamètres, qui viennent d'être décrites. Ces pièces 1 ont été ainsi assemblées par brides 16, 26 respectivement en entrée et en sortie de turbocompresseur et en sortie de soupape de décharge d'un moteur à combustion interne.

Les essais effectués pendant plusieurs mois ont permis de mettre en exergue qu'aucune pièce de liaison 1 selon l'invention ne présentait de signe de fatigue ou d'usure, ni de dégradation du fonctionnement (toutes les pièces 1 ont conservé leurs degrés de liberté et l'étanchéité dynamique).

L'invention est définie par les revendications en annexe.

Bien que décrite en référence à l'application principale visée, à savoir une liaison rotule dans un circuit de circulation de gaz en sortie d'un moteur à combustion de véhicule automobile, l'invention est également applicable à tout domaine dans lequel il est avantageux d'introduire une liaison mécanique simple et fiable comportant un ou plusieurs degrés de liberté, avec ou sans circulation de fluide à travers la pièce de liaison.

## Revendications

1. Pièce de liaison (1), destinée à réaliser une liaison mécanique entre deux éléments, comprenant :
- une partie femelle (10) comprenant une portion d'assemblage mécanique (11) à un premier élément distinct de la pièce, et une portion de réception (12) dans la continuité de la portion d'assemblage mécanique, la portion de réception comprenant une seule enveloppe (14) conformée en une section équatoriale de sphère,
- une partie mâle (20) comprenant une portion d'assemblage mécanique (21) à un deuxième élément distinct de la pièce, et une portion d'insertion (22) dans la continuité de la portion d'assemblage mécanique, la portion d'insertion étant conformée en une section équatoriale de sphère, insérée avec jeu à l'intérieur de l'enveloppe (14) de la portion de réception en étant maintenue dans cette dernière, de sorte que la partie mâle soit mobile en rotation selon un ou plusieurs degrés de liberté par rapport à la partie femelle tout en étant assemblée mécaniquement avec cette dernière, **caractérisée en ce que**
la partie mâle et la partie femelle étant assemblées entre elles sans aucun composant ou moyen supplémentaire, et
la pièce de liaison étant configurée de sorte que la surface extérieure de la portion d'insertion et la surface intérieure de l'enveloppe de la portion de réception sont en contact continu sur l'ensemble de la circonférence de l'intérieur de la pièce de liaison.

2. Pièce de liaison (1), destinée à réaliser une liaison mécanique entre deux éléments, comprenant :
- une partie femelle (10) comprenant une portion d'assemblage mécanique (11) à un premier élément distinct de la pièce, et une portion de réception (12) dans la continuité de la portion d'assemblage mécanique, la portion de réception comprenant deux enveloppes (13, 14) conformées chacune en une section équatoriale de sphère, les deux sections équatoriales de sphère (13, 14) étant concentriques et séparées par un volume libre (V),
- une partie mâle (20) comprenant une portion d'assemblage mécanique (21) à un deuxième élément distinct de la pièce, et une portion d'insertion (22) dans la continuité de la portion d'assemblage mécanique, la portion d'insertion étant conformée en une section équatoriale de sphère, insérée avec jeu dans le volume libre de la portion de réception en étant maintenue dans cette dernière, de sorte que la partie mâle soit mobile en rotation selon un ou plusieurs degrés de liberté par rapport à la partie femelle tout en étant assemblée mécaniquement avec cette dernière.

3. Pièce de liaison (1) selon l'une des revendications 1 ou 2, l'une de la portion de réception (12) ou de la portion d'insertion (22) comportant en outre une rainure, l'autre de la portion de réception ou de la portion d'insertion comportant un pion inséré dans la rainure, la rainure et le pion étant configurés de sorte que la partie mâle soit mobile en rotation selon deux degrés de liberté par rapport à la partie femelle.

4. Pièce de liaison (1) selon l'une des revendications 1 ou 2, l'une de la portion de réception (12) ou de la portion d'insertion (22) comportant en outre une rainure, l'autre de la portion de réception ou de la portion d'insertion comportant une languette de longueur inférieure à celle de la rainure et insérée dans la rainure, la rainure et la languette étant configurées de sorte que la partie mâle soit mobile en rotation selon un degré de liberté par rapport à la partie femelle.

5. Pièce de liaison (1) selon l'une des revendications précédentes, l'amplitude de mouvement entre la partie femelle et la partie mâle, définie par l'angle d'inclinaison (α) entre l'axe de symétrie (X1) de la portion de réception et celui (X2) de la portion d'insertion, étant compris entre 0° et 20°, de préférence entre 0° et 10°.

6. Pièce de liaison (1) selon l'une des revendications précédentes, les portions d'assemblage mécanique respectivement de la partie femelle et de la partie mâle étant des troncs de cônes ou les portions d'assemblage mécanique respectivement de la partie femelle et de la partie mâle étant des portions de cylindre (11, 21), les portions de cylindre étant de préférence de diamètres extérieurs identiques.

7. Pièce de liaison (1) selon l'une des revendications précédentes, les parties mâle et femelle étant débouchantes, de sorte qu'un fluide puisse circuler à l'intérieur de la pièce de liaison, depuis l'une des portions d'assemblage mécanique vers l'autre.

8. Pièce de liaison (1) selon la revendication 6 en combinaison avec la revendication 7, les portions d'assemblage mécanique étant des portions de cylindre, les portions de cylindre étant de diamètres intérieurs identiques.

9. Pièce de liaison (1) selon la revendication 6 en combinaison avec la revendication 7, les portions d'assemblage mécanique étant des portions de cylindre, les portions de cylindre étant de diamètres intérieurs différents.

10. Pièce de liaison (1) selon l'une des revendications précédentes, le(s) matériau(x) constitutif(s) de la partie mâle et de la partie femelle étant adaptés pour supporter des températures comprises entre -50°C et 1100°C et en particulier, jusqu'à 1050 °C.

11. Pièce de liaison (1) selon l'une des revendications précédentes, le(s) matériau(x) constitutif(s) de la partie mâle et/ou de la partie femelle étant choisi(s) parmi tout type de matériau soudable, tel qu'un alliage à base de nickel ou un acier inoxydable.

12. Pièce de liaison (1) selon l'une des revendications 3 à 11 en combinaison avec la revendication 2, comprenant un ou plusieurs orifices traversants (15) depuis l'extérieur dans le volume libre (V).

13. Pièce de liaison (1) selon l'une des revendications précédentes, l'une et/ou l'autre des portions d'assemblage mécanique au premier et au deuxième élément intégrant une bride de fixation (16, 26).

14. Procédé de fabrication d'une pièce de liaison (1) selon l'une des revendications précédentes, selon lequel la partie femelle et la partie mâle sont réalisées et assemblées mécaniquement ensemble en une seule étape par fabrication additive.

15. Utilisation d'une pièce de liaison (1) selon l'une des revendications 1 à 13, dans un circuit de gaz d'échappement en sortie d'un moteur à combustion interne, notamment de véhicule automobile, et/ou en entrée d'un turbocompresseur de véhicule automobile.

## Patentansprüche

1. Verbindungsstück (1), das dazu bestimmt ist, eine mechanische Verbindung zwischen zwei Elementen auszuführen, umfassend:
- einen weiblichen Teil (10), der einen Abschnitt zum mechanischen Fügen (11) an ein vom Stück verschiedenes erstes Element und einen Aufnahmeabschnitt (12) in der Fortführung des Abschnitts zum mechanischen Fügen umfasst, wobei der Aufnahmeabschnitt eine einzige Hülle (14) umfasst, die als äquatorialer Kugelquerschnitt ausgebildet ist,
- einen männlichen Teil (20), der einen Abschnitt zum mechanischen Fügen (21) an ein vom Stück verschiedenes zweites Element und einen Einsteckabschnitt (22) in der Fortführung des Abschnitts zum mechanischen Fügen umfasst, wobei der Einsteckabschnitt als äquatorialer Kugelquerschnitt ausgebildet ist, mit Spiel in das Innere der Hülle (14) des Aufnahmeabschnitts eingesteckt ist und dabei in Letzterem gehalten wird, so dass der männliche Teil gemäß einem oder mehreren Freiheitsgraden in Bezug auf den weiblichen Teil drehbeweglich ist und dabei mechanisch mit Letzterem gefügt ist, **dadurch gekennzeichnet, dass** der männliche Teil und der weibliche Teil ohne irgendein zusätzliches Bauteil oder Mittel untereinander gefügt sind, und
das Verbindungsstück so gestaltet ist, dass die Außenoberfläche des Einsteckabschnitts und die Innenoberfläche der Hülle des Aufnahmeabschnitts über den gesamten Umfang des Inneren des Verbindungsstücks durchgängig in Kontakt sind.

2. Verbindungsstück (1), das dazu bestimmt ist, eine mechanische Verbindung zwischen zwei Elementen auszuführen, umfassend:
- einen weiblichen Teil (10), der einen Abschnitt zum mechanischen Fügen (11) an ein von dem Stück verschiedenes erstes Element und einen Aufnahmeabschnitt (12) in der Fortführung des Abschnitts zum mechanischen Fügen umfasst, wobei der Aufnahmeabschnitt zwei Hüllen (13, 14) umfasst, die jeweils als äquatorialer Kugelquerschnitt ausgebildet sind, wobei die beiden äquatorialen Kugelquerschnitte (13, 14) konzentrisch und durch ein freies Volumen (V) getrennt sind,
- einen männlichen Teil (20), der einen Abschnitt zum mechanischen Fügen (21) an ein vom Stück verschiedenes zweites Element und einen Einsteckabschnitt (22) in der Fortführung des Abschnitts zum mechanischen Fügen umfasst, wobei der Einsteckabschnitt als ein äquatorialer Kugelabschnitt ausgebildet ist, mit Spiel in das freie Volumen des Aufnahmeabschnitts eingesteckt ist und dabei in Letzterem gehalten wird, so dass der Einsteckteil gemäß einem oder mehreren Freiheitsgraden in Bezug auf den weiblichen Teil drehbeweglich ist und dabei mechanisch mit Letzterem gefügt ist.

3. Verbindungsstück (1) nach einem der Ansprüche 1 oder 2, wobei der eine des Aufnahmeabschnitts (12) oder des Einsteckabschnitts (22) ferner eine Nut aufweist, wobei der andere des Aufnahmeabschnitts oder des Einsteckabschnitts einen Stift aufweist, der in die Nut eingesteckt ist, wobei die Nut und der Stift so gestaltet sind, dass der männliche Teil gemäß zwei Freiheitsgraden in Bezug auf den weiblichen Teil drehbeweglich ist.

4. Verbindungsstück (1) nach einem der Ansprüche 1 oder 2, wobei der eine des Aufnahmeabschnitts (12) oder des Einsteckabschnitts (22) ferner eine Nut aufweist, wobei der andere des Aufnahmeabschnitts oder des Einsteckabschnitts eine Lasche aufweist, deren Länge geringer als die der Nut ist und die in die Nut eingesteckt ist, wobei die Nut und die Lasche so gestaltet sind, dass der männliche Teil gemäß einem Freiheitsgrad in Bezug auf den weiblichen Teil drehbeweglich ist.

5. Verbindungsstück (1) nach einem der vorhergehenden Ansprüche, wobei die Bewegungsamplitude zwischen dem weiblichen Teil und dem männlichen Teil, definiert durch den Neigungswinkel (α) zwischen der Symmetrieachse (X1) des Aufnahmeabschnitts und derjenigen (X2) des Einsteckabschnitts, zwischen 0° und 20°, bevorzugt zwischen 0° und 10° beträgt.

6. Verbindungsstück (1) nach einem der vorhergehenden Ansprüche, wobei die Abschnitte zum mechanischen Fügen des weiblichen Teils beziehungsweise des männlichen Teils Kegelstümpfe sind oder die Abschnitte zum mechanischen Fügen des weiblichen Teils beziehungsweise des männlichen Teils Zylinderabschnitte (11, 21) sind, wobei die Zylinderabschnitte bevorzugt gleiche Außendurchmesser haben.

7. Verbindungsstück (1) nach einem der vorhergehenden Ansprüche, wobei die männlichen und weiblichen Teile ineinander münden, so dass ein Fluid im Innern des Verbindungsstücks von einem der Abschnitte zum mechanischen Fügen zum anderen fließen kann.

8. Verbindungsstück (1) nach Anspruch 6 in Kombination mit Anspruch 7, wobei die Abschnitte zum mechanischen Fügen Zylinderabschnitte sind, wobei die Zylinderabschnitte gleiche Innendurchmesser haben.

9. Verbindungsstück (1) nach Anspruch 6 in Kombination mit Anspruch 7, wobei die Abschnitte zum mechanischen Fügen Zylinderabschnitte sind, wobei die Zylinderabschnitte unterschiedliche Innendurchmesser haben.

10. Verbindungsstück (1) nach einem der vorhergehenden Ansprüche, wobei der oder die Werkstoffe, aus denen der männliche Teil und der weibliche Teil bestehen, geeignet sind, Temperaturen zwischen -50 °C und 1100 °C und insbesondere bis zu 1050 °C standzuhalten.

11. Verbindungsstück (1) nach einem der vorhergehenden Ansprüche, wobei der oder die Werkstoffe, aus denen der männliche Teil und der weibliche Teil bestehen, unter allen Arten von schweißbaren Werkstoffen wie beispielsweise einer Legierung auf Nickelbasis oder einem nichtrostenden Stahl gewählt sind.

12. Verbindungsstück (1) nach einem der Ansprüche 3 bis 11 in Kombination mit Anspruch 2, das eine oder mehrere Durchgangsbohrungen (15) von außen in das freie Volumen (V) umfasst.

13. Verbindungsstück (1) nach einem der vorhergehenden Ansprüche, wobei der eine und/oder der andere der Abschnitte zum mechanischen Fügen an das erste und das zweite Element einen Befestigungsflansch (16, 26) aufweisen.

14. Verfahren zur Fertigung eines Verbindungsstücks (1) nach einem der vorhergehenden Ansprüche, gemäß dem der weibliche Teil und der männliche Teil in einem einzigen Schritt durch additive Fertigung ausgeführt und mechanisch zusammengefügt werden.

15. Verwendung eines Verbindungsstücks (1) nach einem der Ansprüche 1 bis 13 in einem Abgaskreislauf im Auslass eines Verbrennungsmotors, insbesondere eines Kraftfahrzeugs, und/oder im Einlass eines Kraftfahrzeug-Turboladers.

## Claims

1. Joining piece (1) for producing a mechanical joint between two elements, comprising:
- a female part (10) comprising a portion (11) for mechanical assembly with a first element separate from the part, and a receiving portion (12) continuing on from the mechanical assembly portion, the receiving portion comprising a single shell (14) in the shape of an equatorial section of a sphere,
- a male part (20) comprising a portion (21) for mechanical assembly with a second element separate from the part, and an insertion portion (22) continuing on from the mechanical assembly portion, the insertion portion being in the shape of an equatorial section of a sphere, inserted with clearance into the shell (14) of the receiving portion and being retained in it, so that the male part is rotatably mobile in one or more degrees of freedom relative to the female part while being mechanically assembled with it, **characterized in that** the male part and the female part are assembled together without any additional component or means, and
the joining piece is configured so that the outer surface of the insertion portion and the inner surface of the shell of the receiving portion are in continuous contact over the entire circumference of the inside of the joining piece.

2. Joining piece (1) for producing a mechanical joint between two elements, comprising:
- a female part (10) comprising a portion (11) for mechanical assembly with a first element separate from the part, and a receiving portion (12) continuing on from the mechanical assembly portion, the receiving portion comprising two shells (13, 14) each in the shape of an equatorial section of a sphere, the two equatorial sections of a sphere (13, 14) being concentric and separated by a free space (V),
- a male part (20) comprising a portion (21) for mechanical assembly with a second element separate from the part, and an insertion portion (22) continuing on from the mechanical assembly portion, the insertion portion being in the shape of an equatorial section of a sphere, inserted with clearance into the free space of the receiving portion and being retained in it, so that the male part is rotatably mobile in one or more degrees of freedom relative to the female part while being mechanically assembled with it.

3. Joining piece (1) according to one of Claims 1 and 2, one of the receiving portion (12) and the insertion portion (22) also including a slot, the other of the receiving portion and the insertion portion including a pin inserted into the slot, the slot and the pin being configured so that the male part is rotatably mobile in two degrees of freedom relative to the female part.

4. Joining piece (1) according to one of Claims 1 and 2, one of the receiving portion (12) and the insertion portion (22) also including a slot, the other of the receiving portion and the insertion portion including a tab that is shorter than the slot and inserted into the slot, the slot and the tab being configured so that the male part is rotatably mobile in one degree of freedom relative to the female part.

5. Joining piece (1) according to one of the previous claims, the amplitude of movement between the female part and the male part, defined by the angle of inclination (α) between the axis of symmetry (X1) of the receiving portion and the axis of symmetry (X2) of the insertion portion, being between 0° and 20°, preferably between 0° and 10°.

6. Joining piece (1) according to one of the previous claims, the mechanical assembly portions of the female part and the male part respectively being truncated cones or the mechanical assembly portions of the female part and the male part respectively being cylindrical portions (11, 21), the cylindrical portions preferably having identical outer diameters.

7. Joining piece (1) according to one of the previous claims, the male and female parts being open-ended, so that a fluid can circulate inside the joining piece, from one of the mechanical assembly portions towards the other.

8. Joining piece (1) according to Claim 6 in combination with Claim 7, the mechanical assembly portions being cylindrical portions, the cylindrical portions having identical inner diameters.

9. Joining piece (1) according to Claim 6 in combination with Claim 7, the mechanical assembly portions being cylindrical portions, the cylindrical portions having different inner diameters.

10. Joining piece (1) according to one of the previous claims, the material(s) forming the male part and the female part being suitable for withstanding temperatures of between -50°C and 1,100°C and in particular, up to 1,050 °C.

11. Joining piece (1) according to one of the previous claims, the material(s) forming the male part and/or female part being selected from any type of weldable material, such as a nickel-based alloy or a stainless steel.

12. Joining piece (1) according to one of Claims 3 to 11 in combination with Claim 2, comprising one or more through-orifices (15) from the outside into the free space (V).

13. Joining piece (1) according to one of the previous claims, one and/or the other of the portions for mechanical assembly to the first and second element incorporating a coupling flange (16, 26).

14. Method for manufacturing a joining piece (1) according to one of the previous claims, according to which the female part and the male part are produced and mechanically assembled together in a single step by additive manufacturing.

15. Use of a joining piece (1) according to Claims 1 to 13 in an exhaust gas circuit at the outlet of an internal combustion engine, particularly of motor vehicle, and/or at the inlet of a motor vehicle turbocharger.
